# FASCICULE DE BREVET EUROPEEN

(11) **EP 0 404 633 B1**
(45) Date de publication et mention de la délivrance du brevet: **13.01.1993**
(21) Numéro de dépôt: 90401610.2
(22) Date de dépôt: 12.06.1990
(51) Int. Cl.: B60J 10/00, F16B 5/12, F16B 5/06

(54) **Dispositif de fixation d'un élément profilé sur le bord d'encadrement d'une baie**
Vorrichtung zur Befestigung eines Profilelementes an der Einfassungskante einer Fensteröffnung
Device for fixing a profile element to the edge of a window opening

(30) Priorité: 20.06.1989 FR 8908169
(43) Date de publication de la demande: 27.12.1990
(73) Titulaire: HUTCHINSON, F-75008 Paris (FR)
(72) Inventeur: Guillon, Henri, F-45700 Le Bois St. Maurice sur Fessard (FR)
(74) Mandataire: Orès, Bernard

(56) Documents cités:
- FR-A- 2 618 203
- FR-A- 2 631 075
- GB-A- 943 185
- US-A- 1 895 688
- US-A- 4 769 950

## Description

L'invention a pour objet un dispositif de fixation d'un élément profilé sur le bord d'encadrement d'une baie ainsi que les éléments profilés munis d'un tel dispositif.

On connaît déjà, dans de très nombreuses réalisations, des dispositifs de fixation d'un élément profilé sur le bord d'encadrement d'une baie, quelquefois désigné sous le nom de feuillure. Dans le domaine de l'industrie automobile, l'élément profilé est, par exemple un joint d'étanchéité pour portière qui comporte, pour sa fixation sur un encadrement de glace coulissante ou sur un bord de ceinture de caisse, une partie de fixation à section droite en π, qui coiffe la feuillure en la pinçant d'où le nom de "pince" généralement donné à cette partie dont on a proposé de multiples modes d'exécution, voir par exemple DE-A-3 003 808, DE-A-2 809 502, FR-A-2 618 480, FR-A-2 618 203, etc... Compte-tenu du mode de fabrication des pièces métalliques de carrosserie d'automobile, fréquemment soudées par points d'une part, et de la technique utilisée pour la mise en place des éléments profilés, d'autre part, généralement par enfoncement au maillet de la pince sur le bord de la pièce qui doit être équipée dudit profilé, il est très difficile d'obtenir une fixation de la pince sur la feuillure qui, outre la fonction de montage pour laquelle elle est prévue, assure également une étanchéité satisfaisante, en particulier aux liquides comme l'eau de pluie. En effet, les irrégularités de forme de la feuillure ou la mise en place défectueuse de la pince du profilé, en particulier en raison d'un emboîtement insuffisant par endroits lors de l'enfoncement au maillet, ont pour conséquence que l'étanchéité, -qui est généralement obtenue par coopération du bord de la feuillure avec un bourrelet de mastic du fond de pince-, n'est pas réalisée.

Le problème se pose, par conséquent, de fournir un dispositif associé à l'élément profilé, et en particulier à la pince qui, quel que soit le mode de montage dudit élément profilé d'une part et des possibles irrégularités de forme de la feuillure, d'autre part, assure néanmoins, en toutes circonstances, une étanchéité satisfaisante après montage de l'élément profilé sur ladite feuillure.

C'est, par conséquent, un but général de l'invention de fournir un dispositif permettant de résoudre le problème posé, et cela de façon simple et sûre.

Conformément à l'invention, ce but est atteint dans un dispositif de fixation d'un élément profilé destiné à être fixé sur une feuillure ou sur le bord d'encadrement d'une baie par une pince ayant une section droite sensiblement en forme de π, c'est-à-dire à deux ailes généralement parallèles, caractérisé en ce que par le fait qu'à ladite pince est associée une membrane en matériau souple, élastiquement déformable, dont la section droite est sensiblement en forme de V et qui est fixée par ses extrémités distantes de l'apex du V au voisinage des extrémités libres des ailes de la pince d'une part, la forme et les dimensions de la membrane étant telles, d'autre part, que, lorsque la pince est mise en place par emboîtement sur la feuillure ou sur le bord qu'elle est destinée à équiper, les parois en V de la membrane s'appliquent à contact surfacique sur la ou les tôle(s) définissant la feuillure ou le bord d'encadrement de la baie.

Dans une forme de réalisation préférée, la membrane déformable est à base de matériau élastomère cellulaire et est obtenue par coextrusion du ou des matériau(x) qui constitue(nt) la pince de fixation de la partie active ou opératoire de l'élément profilé, par exemple du joint d'étanchéité.

Selon un mode de réalisation de l'invention, on prévoit de conformer la membrane de manière à ce qu'elle présente en outre, en dehors de sa partie en V, deux courtes lèvres érigées à partir des extrémités libres des parois du V, lesdites lèvres étant symétriques par rapport au plan moyen longitudinal de la pince et dirigées l'une vers l'autre en étant inclinées sur la direction dudit plan longitudinal moyen.

Dans un dispositif selon un mode de réalisation de l'invention où la pince présente sur la face interne de ses ailes des nervures, en soi connues, destinées à l'immobiliser par un effet d'arc-boutement sur la ou les tôle(s) délimitant la feuillure ou le bord de la baie, on prévoit que lesdites nervures, - également symétriques par rapport au plan longitudinal moyen de la pince-, aient une dimension et une forme telles que leurs bords libres viennent au contact des parois en V de la membrane, contribuant ainsi à son appui effectif sur la ou les tôle(s) délimitant la feuillure ou le bord libre de la baie et, par conséquent, à l'excellente étanchéité obtenue à l'aide du dispositif selon l'invention.

La structure qui vient d'être décrite permet de s'affranchir des imperfections de forme de la feuillure, en raison du contact surfacique de la membrane en matériau souple élastiquement déformable avec la ou les tôle(s) sur lesquelles elle s'applique, d'une part et, d'autre part, d'obtenir une étanchéité satisfaisante, même lorsque l'élément profilé mis en place au maillet n'est pas totalement et correctement emboîté sur ladite feuillure en raison de la forme et la disposition même de ladite membrane.

L'invention a également pour objet les éléments profilés comme des joints d'étanchéité ou analogues comportant un dispositif de fixation tel que défini ci-dessus.

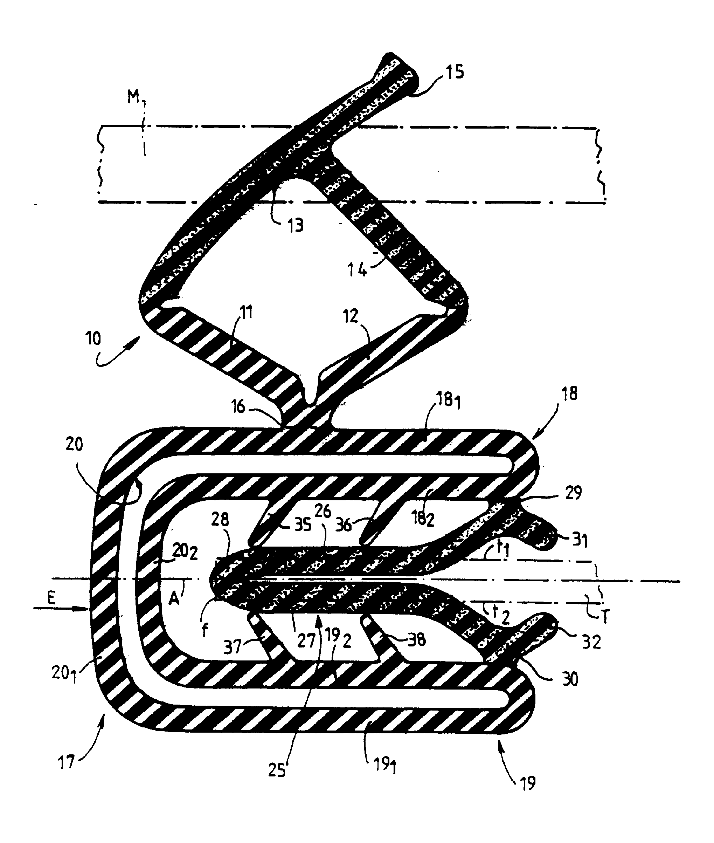

D'autres caractéristiques et avantages de l'invention apparaîtront de la description qui suit, faite à titre d'exemple et en référence au dessin annexé, qui est une vue en coupe transversale d'un élément profilé muni d'un dispositif selon l'invention.

Dans la forme de réalisation décrite et représentée, l'élément profilé 10 comprend une poutre tubulaire dont la section droite, quelque peu en losange, comporte deux branches 11 et 12 en matériau élastomère relativement dur et deux branches 13 et 14, également en matériau élastomère mais de plus faible dureté, par exemple du type cellulaire, une des branches se prolongeant en dehors de la poutre par une lèvre d'étanchéité 15 propre à coopérer avec une partie mobile M illustrée en trait mixte, étant rappelé ici que, comme usuel dans l'industrie du caoutchouc, les parties en matériau élastomère sont dessinées dans leur condition non sollicitée. La forme de l'élément profilé 10, qui peut être destiné, par exemple, à former un joint d'étanchéité de portière automobile ou de vitre de custode, n'est donnée, bien entendu, qu'à titre d'illustration sans qu'aucun caractère limitatif de l'invention ne lui soit attaché.

Comme bien visible sur le dessin, l'élément 10, et de façon plus précise ses branches 11 et 12, sont reliées par un col 16 à la partie de fixation ou pince 17 de montage sur la feuillure f que forme(nt) une ou des tôle(s) T par exemple d'une partie de carrosserie automobile. La pince de fixation 17, dont la section droite est en forme de π, et qui est extrudée en le même matériau que les branches 11 et 12 du profil d'étanchéité, c'est-à-dire en matériau élastomère ou matériau analogue relativement dur, présente ainsi des ailes 18 et 19 reliées par un fond 20, ces ailes et ce fond comportant, dans la réalisation décrite et représentée, une structure à deux cloisons parallèles référencées 18₁ et 18₂ pour l'aile 18, 19₁ et 19₂ pour l'aile 19, et 20₁ et 20₂ pour le fond 20.

Conformément à l'invention, à la pince de fixation 17 est associée une membrane, 25, en matériau souple, du type élastomère ou analogue, de préférence à structure cellulaire et qui est conformée et reliée aux ailes de la pince 17 de manière telle que, lors de la mise en place de l'élément profilé 10 sur la ou les tôle(s) T par un mouvement d'emboîtement suivant la direction de la flèche E, - c'est-à-dire parallèlement au plan moyen longitudinal A de la pince-, pour coiffer la feuillure f, ladite membrane élastiquement déformable s'applique à contact surfacique sur les faces latérales t₁ et t₂ de la ou des tôle(s) T et sur la feuillure f.

Dans la forme de réalisation décrite et représentée la membrane 25 est coextrudée avec la pince 17 et le profilé 10 et est en forme de V à parois 26 et 27 très rapprochées dans leur condition non opératoire, qui est celle représentée au dessin, les extrémités desdites parois distantes de l'apex 28 étant inclinées à l'écartement du plan médian A et attachées sur les cloisons 18₂ et 19₂, respectivement, au voisinage de l'extrémité libre des ailes 18 et 19 comme montré en 29 et 30.

Une telle structure de la pince 17 permet, même si sa mise en place n'est pas totalement satisfaisante, par exemple par enfoncement insuffisant ou encore si la feuillure présente des irrégularités de forme, d'assurer cependant l'étanchéité de la pince sur la ou les tôle(s) T, notamment aux liquides comme l'eau de pluie, et cela sans avoir à recourir à un mastic de fond de pince ou à des lèvres d'étanchéité à structure complexe.

Pour parfaire encore le résultat obtenu, l'invention prévoit en outre deux courtes lèvres 31 et 32, d'une pièce avec la membrane 25 , issues des zones d'attache 29 et 30 sur les ailes 18 et 19, les lèvres 31 et 32 s'étendant en dehors de la partie en V de la membrane en étant inclinées sur la direction du plan médian A et dirigées l'une vers l'autre, de sorte que, lors de la mise en place de l'élément profilé sur la feuillure, la déformation des parois 26 et 27 de la membrane 25 provoque le rapprochement des lèvres 31 et 32 de la ou des tôle(s) T par un mouvement de basculement propice au blocage de la pince sur la ou les tôle(s) (T). A celui-ci contribue également le fait que sur les cloisons 18₂ et 19₂ sont prévues des nervures 35, 36 et 37, 38, respectivement, inclinées sur la direction du plan longitudinal moyen du plan A et symétriques par rapport à celui-ci et dont la position et la longueur sont telles que, après mise en place de l'élément profilé sur la feuillure, elles appuient sur la membrane 25 en s'opposant par un effet de contre-pression à l'extraction de la pince hors de la feuillure.

## Revendications

1. Dispositif de fixation d'un élément profilé sur une feuillure ou sur le bord d'encadrement d'une baie par une pince ayant une section droite sensiblement en forme de π, c'est-à-dire à deux ailes généralement parallèles, caractérisé en ce qu'à ladite pince (17) est associée une membrane (25) en matériau souple, élastiquement déformable, dont la section droite est sensiblement en forme de V et qui est fixée par ses extrémités (29, 30) distantes de l'apex (28) du V au voisinage des extrémités libres des ailes (18, 19) de la pince (17) d'une part, la forme et les dimensions de la membrane étant telles, d'autre part, que, lorsque la pince est mise en place par emboîtement sur la feuillure (f) ou sur le bord qu'elle est destinée à équiper, lesdites parois en V de la membrane (25) s'appliquent à contact surfacique sur la ou les tôle(s) (T) définissant la feuillure ou le bord d'encadrement de la baie.

2. Dispositif selon la revendication 1, caractérisé en ce que la membrane déformable (25) est à base de matériau élastomère cellulaire et est obtenue par coextrusion du ou des matériau(x) qui constitue(nt) la pince de fixation (17) de la partie active ou opératoire (13, 14, 15) de l'élément profilé (10).

3. Dispositif selon l'une quelconque des revendications précédentes, caractérisé en ce que la membrane (25) présente en outre en dehors de sa partie en V, deux courtes lèvres (31, 32) érigées à partir des extrémités libres (29, 30) des parois (26, 27) du V, lesdites lèvres étant symétriques par rapport au plan longitudinal moyen (A) de la pince (17) et dirigées l'une vers l'autre en étant inclinées sur la direction dudit plan longitudinal moyen (A).

4. Dispositif selon l'une quelconque des revendications précédentes, caractérisé en ce que ladite pince (17) présente sur la face interne de ses ailes (18, 19) des nervures (35-37), destinées à l'immobiliser par un effet d'arc-boutement sur la ou les tôle(s) (T) délimitant la feuillure (f) ou le bord de la baie, lesdites nervures, également symétriques par rapport au plan longitudinal moyen (A) de la pince ayant une dimension et une forme telles que leurs bords libres viennent au contact des parois (26, 27) en V de la membrane cellulaire (25).

5. Dispositif selon l'une quelconque des revendications précédentes, caractérisé en ce que la pince (17) en matériau élastomère ou analogue relativement dur est à structure à deux cloisons parallèles tant pour ses ailes (18, 19) que pour son fond (20).

6. Elément profilé, comme un joint d'étanchéité de portière d'automobile, de vitre de custode ou analogue comportant un dispositif selon l'une quelconque des revendications précédentes pour sa fixation sur une feuillure ou le bord d'encadrement d'une baie.

## Patentansprüche

1. Vorrichtung zum Befestigen eines Profilteiles auf einen Falz oder auf die Kante des Rahmens eines Gestells durch eine Klemme, die einen geraden Abschnitt in der Form eines π besitzt, das heißt mit zwei im wesentlichen parallelen Flügeln, dadurch gekennzeichnet, daß einerseits mit der besagten Klemme (17) eine Membran (25) aus biegsamem Material, elastisch verformbar, verbunden ist, deren gerader Abschnitt eine ausgeprägte V-Form besitzt, der durch seine Enden (29, 30), welche vom Schenkelmittelstück (28) des V getrennt sind, in der Nähe der freien Enden der Flügel (18, 19) der Klemme (17) befestigt ist; die Form und die Ausmaße der Membran sind andererseits so, daß, wenn die Klemme an ihren Platz auf dem Falz (f) oder der Kante, die sie ausrüsten soll, geklemmt wird, die besagten Wände der Membran (25) in Form eines V sich auf das Blech oder die Bleche (T), welches oder welche dem Falz oder der Kante des Rahmens des Gestells entsprechen, anlegen und es oder sie an der Oberfläche berühren.

2. Vorrichtung gemäß Anspruch 1, dadurch gekennzeichnet, daß die verformbare Membran (25) auf elastomerem, schaumartigen Material basiert und durch Koextrusion des Materials oder der Materialien erhalten wird, aus dem oder aus denen die Befestigungsklemme (17) des aktiven oder wirksamen Abschnittes (13, 14, 15) des Profilteils (10) gebildet wird.

3. Vorrichtung gemäß einem der vorhergehenden Ansprüche, dadurch gekennzeichnet, daß die Membran (25) außerdem außerhalb ihres V-förmigen Abschnittes zwei kurze Lippen (31, 32) aufweist, die ausgehend von den freien Enden (29, 30) der Wände (26, 27) des V aufgerichtet sind, wobei die besagten Lippen symmetrisch in Bezug auf die mittlere longitudinale Ebene (A) der Klemme (17) sind und gegeneinander gerichtet sind, wenn sie in Richtung der besagten mittleren longitudinalen Ebene (A) geneigt werden.

4. Vorrichtung gemäß einem der vorhergehenden Ansprüche, dadurch gekennzeichnet, daß die besagte Klemme (17) auf der Innenseite ihrer Flügel (18, 19) Rippen (35 - 37) besitzt, die dazu bestimmt sind, sie durch Verstrebung auf dem Blech oder den Blechen (T) zu fixieren, welche den Falz (f) oder die Kante des Gestelles begrenzen, wobei die besagten Rippen ebenfalls symmetrisch in Bezug auf die mittlere longitudinale Ebene (A) der Klemme sind und eine Größe und eine Form besitzen, daß ihre freien Kanten die Wände (26, 27) in V-Form der schaumartigen Membran (25) berühren.

5. Vorrichtung gemäß einem der vorhergehenden Ansprüche, dadurch gekennzeichnet, daß die Klemme (17) aus elastischem Material oder Analogem, relativ harten, so geformt ist, daß sie zwei parallele Trennwände sowohl für ihre Flügel (18, 19) wie auch für ihre Basis (20) besitzt.

6. Profilteil, wie eine Dichtung einer Wagentür eines Fahrzeugs, einer Schutzscheibe oder Analogem, das eine Vorrichtung gemäß einem der vorhergehenden Ansprüche zum Befestigen auf einem Falz oder der Kante des Rahmens eines Gestells umfaßt.

## Claims

1. Device for fixing a profile element on a window rabbet or to the edge of a window opening by means of a clamp having a substantially π-shaped straight section, i.e. with two generally parallel wings, characterised in that the said clamp (17) is associated with a membrane (25) of flexible elastically deformable material, the straight section of which is substantially V-shaped and which is fixed by its ends (29, 30) spaced from the apex (28) of the V in the vicinity of the free ends of the wings (18, 19) of the clamp (17) on the one hand, the shape and the dimensions of the membrane being such, on the other hand, that, when the clamp is set in place by fitting on the window rabbet (f) or on the edge which it is intended to equip, the said V-shaped walls of the membrane (25) apply in surface contact on the metal sheet(s) (T) defining the rabbet or the edge of the window opening.

2. Device according to claim 1, characterised in that the deformable membrane (25) is based on cellular elastomeric material and is obtained by co-extrusion of the material(s) which form(s) the fixing clamp (17) of the operative or active part (13, 14, 15) of the profile element (10).

3. Device according to any one of the preceding claims, characterized in that the membrane (25) has in addition, outside its V-shaped part, two short lips (31, 32) standing up from the free ends (29, 30) of the walls (26, 27) of the V, the said lips being symmetrical relative to the mean longitudinal plane (A) of the clamp (17) and directed one towards the other slanting in the direction of the said mean longitudinal plane (A).

4. Device according to any one of the preceding claims, characterised in that the said clamp (17) has on the inner face of its wings (18, 19) ribs (35-37) intended to immobilize it by a buttressing effect on the metal sheet(s) defining the rabbet (f) or the edge of the opening, the said ribs, also symmetrical relative to the mean longitudinal plane (A) of the clamp having a dimension and a shape such that their free ends come in contact with the V-shaped walls (26, 27) of the cellular membrane (25).

5. Device according to any one of the preceding claims, characterised in that the clamp (17) of relatively hard elastomeric or similar material is of a structure comprising two parallel partitions both for its wings (18, 19) and for its bottom (20).

6. Profile element, such as a sealing joint for a car door, a car rear side window or the like including a device according to any one of the foregoing claims for its fixing on a window rabbet or to the edge of a window opening.
